# EUROPÄISCHE PATENTANMELDUNG

(11) **EP 0 774 570 A1**
(43) Veröffentlichungstag der Anmeldung: **21.05.1997**
(21) Anmeldenummer: 96118081.7
(22) Anmeldetag: 12.11.1996
(51) Int. Cl.: F02B 37/16, F02B 33/44

(54) **Drosseleinrichtung zur Steuerung der Luft- oder Gemischzuführung bei füllungsgesteuerten Brennkraftmaschinen**

(30) Priorität: 15.11.1995 DE 19542613; 10.09.1996 DE 19636657
(71) Anmelder: MAN Technologie AG, 86153 Augsburg (DE)
(72) Erfinder: Hirschbichler, Franz, Dr. Dipl.-Ing., 80995 München (DE); Müller, Johann, Dipl.-Ing., 82223 Eichenau (DE)

(57) **Zusammenfassung**

Bei einer Drosseleinrichtung zur Steuerung der Luft- bzw. der Gemischzuführung bei füllungsgesteuerten Brennkraftmaschinen mit einem Führungskanal (2), in dem eine um eine Drehachse (4) verdrehbare, ihn in ihrer Schließstellung im wesentlichen vollständig verschließende Drosselklappe (3) angeordnet ist, ist in der Wandung (1) des Führungskanales (2) (in Strömungsrichtung (L) der Luft bzw. des Gemisches gesehen) in dessen Bereich unmittelbar vor der Drosselklappe (3) ein Ableitungskanal (7) angebracht, dessen Durchtrittsquerschnitt mittels eines Steuerelementes (6) in Abhängigkeit von der Stellung der Drosselklappe (3) derart verstellbar ist, daß er in Schließstellung der Drosselklappe (3) vollständig offen und ab Erreichen eines vorgegebenen Öffnungswinkels der Drosselklappe (3) vollständig geschlossen ist.

## Beschreibung

Die Erfindung bezieht sich auf eine Drosseleinrichtung zur Steuerung der Luft- oder Gemischzuführung bei füllungsgesteuerten Brennkraftmaschinen, insbesondere bei Verbrennungsmotoren, mit einem Führungskanal, in dem eine um eine Drehachse verdrehbare, ihn in ihrer Schließstellung im wesentlichen vollständig verschließende Drosselklappe angeordnet ist.

Füllungsgesteuerte Brennkraftmaschinen werden sowohl im stationären Einsatz, wie z.B. als Stromerzeuger oder zum Antrieb von Verdichtern, als auch in Fahrzeugen (Kraftfahrzeuge, Schiffe usw.) eingesetzt. Dabei kommen unterschiedliche Brennstoffe zum Einsatz, so z.B. Benzin, Erdgas, Biogas, Flüssiggas, Methanol u.a. Die Leistung und Drehzahl solcher Brennkraftmaschinen, vor allem von Verbrennungsmotoren, wird über Steuerelemente für die zugeführte Ansaugluft bzw. die Mischung aus Ansaugluft und Brennstoff üblicherweise durch Drosselklappen gesteuert. Vor allem bei Stationärmotoren werden Steuerelemente eingesetzt, bei denen die Menge der Luft bzw. des Luft-Brennstoff-Gemisches mit Hilfe einer verdrehbaren Klappe (Drosselklappe) über eine geeignete Veränderung des Strömungsquerschnitts im Ansaugkanal geregelt wird.

Es hat sich jedoch gezeigt, daß bei besonders raschen Steuervorgängen, etwa bei Lastsprüngen oder Schnellabschaltungen, unerwünschte Strömungsvorgänge, wie z.B. Druckwellen o.ä., im Ansaugsystem auftreten können, die bei aufgeladenen Motoren zur Beschädigung von Bauteilen führen können, so z. B. beim Auftreten von Pumpvorgängen bei Turboladern. Ausgehend hiervon liegt der Erfindung die Aufgabe zugrunde, eine gattungsgemäße Drosseleinrichtung zur Steuerung der Luft- oder der Gemischzuführung bei füllungsgesteuerten Brennkraftmaschinen, insbesondere Verbrennungsmotoren, der eingangs genannten Art so zu verbessern, daß das Auftreten solcher unerwünschter Strömungsvorgänge, wie z. B. von unerwünscht starken Druckwellen o.ä., vermieden und damit die Beanspruchung der Bauteile, insbesondere bei aufgeladenen Motoren, drastisch gesenkt und dadurch deren Lebensdauer merklich erhöht werden kann.

Erfindungsgemäß wird dies bei einer Drosseleinrichtung der eingangs genannten Art dadurch erreicht, daß in der Wandung des Führungskanales in dem Bereich (in Strömungsrichtung der Luft bzw. des Gemisches gesehen), der unmittelbar vor der Drosselklappe liegt, ein Ableitungskanal mit erheblich kleinerem Querschnitt als der Querschnitt des Führungskanales angebracht ist, dessen Durchtrittsquerschnitt mittels eines Steuerelementes in Abhängigkeit von der Stellung der Drosselklappe verstellbar ist, wobei er in Schließstellung der Drosselklappe vollständig offen und ab Erreichen eines vorgegebenen Öffnungswinkels der Drosselklappe vollständig geschlossen ist.

Durch die erfindungsgemäßen Maßnahmen kann ein Teil der im Ansaugsystem angesaugten Luft- bzw. Gemischmenge am Ort des Entstehens solcher unerwünschter Strömungsvorgänge an der Drosselklappe z.B. in den Bereich des Ansaugsystems vor dem Turbolader gesteuert abgeleitet werden. Aber auch bei anderen Steuerungsaufgaben kann durch die erfindungsgemäßen Maßnahmen durch gezielte und gesteuerte Ableitung von Teilströmen das Auftreten unerwünschter Strömungsvorgänge, wie etwa von Druckwellen, gut vermieden werden, was sich in einer entsprechend deutlichen Herabsetzung der Beanspruchung der Bauteile und in einer Erhöhung deren Lebensdauer niederschlägt.

Durch die erfindungsgemäßen Maßnahmen wird bewirkt, daß beim Schließen der Drosselklappe unmittelbar vor dieser ein kleiner, definierter Querschnitt des Ableitungskanals freigegeben und damit ein Abziehen eines Teils der Ladung <und eine Rückführung desselben in das Ansaugsystem vor dem Lader) ermöglicht wird.

Bei der Erfindung wird besonders bevorzugt der vorgegebene Öffnungswinkel der Drosselklappe, ab dessen Erreichen der Durchtrittsquerschnitt des Ableitungskanales vollständig geschlossen ist, kleiner als der maximale Öffnungswinkel der Drosselklappe gewählt, wobei auch bei Überschreiten dieses vorgesehenen Öffnungswinkels der Ableitungskanal verschlossen bleibt. Weiterhin bevorzugt ist der vorgegebene Öffnungswinkel der Drosselklappe verstellbar.

Eine andere vorteilhafte Ausgestaltung der Erfindung besteht auch darin, daß das Steuerelement ein im Ableitungskanal angebrachtes Drehventil ist, das besonders bevorzugt als Drehzylinder ausgebildet ist. Vorteilhafterweise wird der Durchlaß in diesem mit einem kreisförmigen oder schlitzförmigen Querschnitt ausgeführt.

Eine vorteilhafte Weiterbildung der Erfindung besteht auch darin, daß das Steuerelement über einen Hebelmechanismus mit der Drehachse der Drosselklappe oder einem Antriebselement für diese verbunden ist, wobei die Kinematik dieses Hebelmechanismus so ausgebildet ist, daß die gewünschte Abhängigkeit der Öffnung des Durchtrittsquerschnitts des Ableitungskanales von der Drosselklappenstellung sichergestellt wird. Dabei kann sowohl eine lineare, wie aber bevorzugt eine mit kleiner werdendem Öffnungswinkel der Drosselklappe progressiv zunehmende Öffnung des Ableitungskanales vorgesehen werden.

Die Erfindung wird nachfolgend anhand der Zeichnung im Prinzip beispielshalber noch näher erläutert. Es zeigen:
Fig. 1 einen Querschnitt durch eine prinzipielle Darstellung einer erfindungsgemäßen Drosseleinrichtung, und
Fig. 2 eine schematische Darstellung der Anordnung der erfindungsgemäßen Drosseleinrichtung aus Fig. 1 in einer Schemadarstellung eines Verbrennungsmotors.

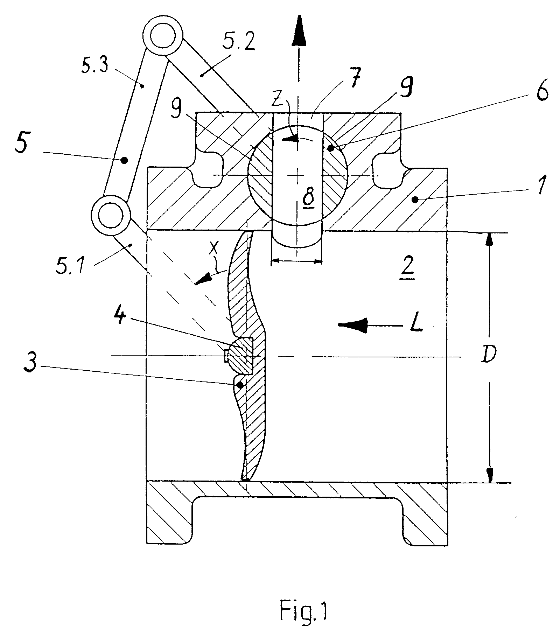

Die Darstellung nach Fig. 1 zeigt eine Drosseleinrichtung, die als Einbau- oder Anbauteil an bzw. in das Ansaugsystem eines Verbrennungsmotors eingesetzt werden kann.

In einem Gehäuse 1, das in seinem Inneren einen Luft- bzw. Gemischführungskanal 2 aufweist, ist innerhalb desselben eine Drosselklappe 3 vorgesehen, die mittels eines Drehbolzens 4 in Pfeilrichtung X verschwenkt werden kann. Der Drehbolzen 4 ist außerhalb des Gehäuses 1 an ein Gestänge 5 angeschlossen, das seine Verdrehbewegung in einer vorbestimmten, gewünschten Weise mit der Verdrehbewegung eines in Form eines Drehzylinders 6 ausgebildeten Drehventiles koppelt. Dieses Drehventil 6 ist innerhalb eines im Gehäuse 1 ebenfalls vorgesehenen Ableitungskanales 7 angebracht, dessen Querschnitt allerdings im Vergleich zum Querschnitt des Führungskanals 2 sehr viel kleiner ausgebildet ist: Bei der Darstellung nach Fig. 1 ist der Ableitungskanal 7 im Querschnitt kreisförmig ausgebildet und weist einen Durchmesser d auf, der erheblich kleiner als der Durchmesser D des Führungskanals 2 ist und im gezeigten Beispiel etwa 1/5 des Durchmessers D beträgt.

Im Inneren des Drehventils 6 ist ein Durchlaß 8 ausgebildet, der im Querschnitt ebenfalls kreisförmig ist und in seinem Durchmesser dem Durchmesser d des Ableitungskanals 7 entspricht.

Die Querschnitte des Ableitungskanales 7 und des Durchlasses 8 könnten auch eine andere Formgebung aufweisen, z.B. schlitzförmig, oval o.ä.

Wenn die Drosselklappe 3 in Richtung des Pfeiles X aus ihrer Verschlußstellung heraus (in Richtung auf eine maximale Öffnungsstellung hin) verschwenkt wird, wird über das Hebelgestänge 5 das Drehventil 6 in Richtung des Pfeiles Z ebenfalls verschwenkt.

Wie Fig. 1 zeigt, befindet sich das Drehventil 6 mit seinem Durchlaß 8 in Ausrichtung zu dem Ableitungskanal 7, d.h. es gibt diesen völlig frei, wenn die Drosselklappe 3 in der in Fig. 1 gezeigten Verschlußstellung ist.

In Strömungsrichtung L des Gemisches im Führungskanal 2 gesehen, mündet der Ableitungskanal 7 an einer Stelle (bevorzugt unmittelbar) vor der Drosselklappe 3 in den Führungskanal 2 ein.

Das Drehventil 6 ebenso wie die Drosselklappe 3 sind in geeigneter Weise so gelagert, daß beide leichtgängig verstellbar sind, d.h. daß die aufzuwendende Verstellkraft möglichst gering gehalten wird.

Das Hebelgestänge 5 kann in jeder geeigneten Konfiguration ausgelegt sein. Bei der Ausbildung nach Fig. 1 besteht es aus einem Bedienungshebel 5.1 zum Verschwenken des Verdrehbolzens 4, einem Hebel 5.2 zum Verschwenken des Drehventils 6 und einem Verbindungselement 5.3, das die Hebel 5.1 und 5.2 miteinander verbindet. Die Lage der einzelnen Elemente bzw. Hebel zueinander sowie deren Längen sind geeignet so gewählt, daß die gewünschte Abhängigkeit der Verschwenkung des Drehventils 6 von der Verschwenkung der Drosselklappe 3 erreicht wird.

Die Koppelung der Drosselklappe 3 mit dem Drehventil 6 ist so ausgelegt, daß bei Erreichen eines vorgegebenen Öffnungswinkels der Drosselklappe 3 (in Pfeilrichtung X in Fig. 1 gesehen) sich das Drehventil 6 in Richtung des Pfeiles Z soweit verdreht hat, daß der Durchlaß 8 keine Verbindung mehr mit dem Ableitungskanal 7 aufweist, so daß in dieser Stellung der Ableitungskanal 7 durch das Drehventil 6 vollständig verschlossen ist. Auch bei einer anschließenden weiteren Öffnungsbewegung der Drosselklappe 3 in Pfeilrichtung X liegen die Mantelabschnitt 9 des Drehventils 6 innerhalb der Öffnung des Ableitungskanals 7, so daß dieser trotz der weiteren Verdrehung des Drehventils 6 weiterhin verschlossen bleibt. Dabei soll sichergestellt werden, daß bis zum Erreichen der maximalen Öffnungsstellung der Drosselklappe 3 das Drehventil 6 nicht so weit in Pfeilrichtung Z verdreht wird, daß erneut eine Verbindung zwischen dessen Durchlaß 8 und dem Ableitungskanal 7 eintritt, so daß ab dem vorgegebenen Öffnungswinkel der Drosselklappe 3, ab dem die Sperre des Ableitungskanales 7 eintritt, bis zur vollständigen Öffnung der Drosselklappe 3 die Sperrung des Ableitungskanals 7 erreicht werden kann.

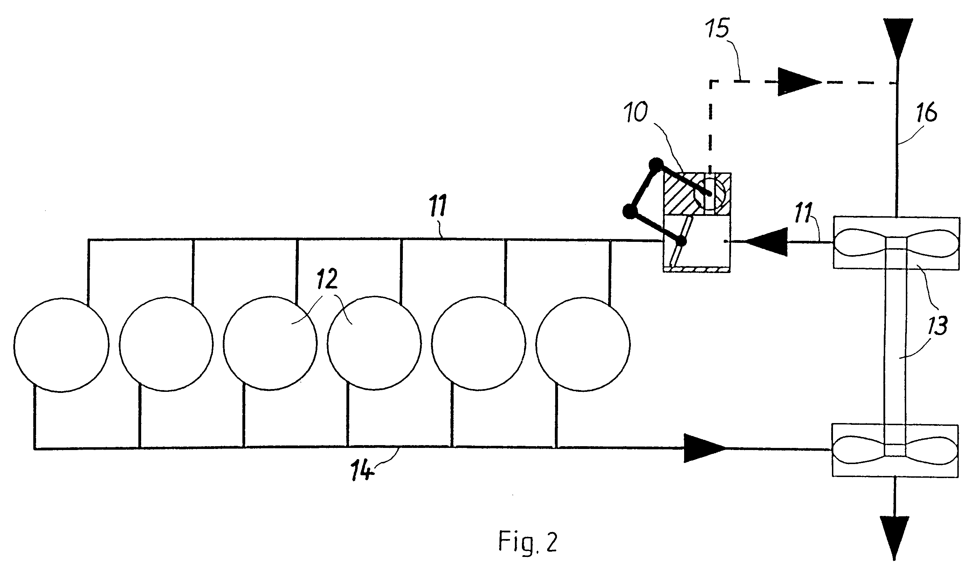

In Fig. 2 ist, schematisch, die Anordnung der Drosseleinrichtung nach Fig. 1 in dem Ansaugsystem eines Verbrennungsmotors dargestellt:

Die hier mit 10 bezeichnete Drosseleinrichtung ist in die zu den Zylindern 12 führende Ansaugleitung 11 eines Verbrennungsmotors eingebaut, wobei sie, wie Fig. 2 zeigt, in Strömungsrichtung des Gemisches bzw. der Ansaugluft einem Turbolader 13 nachgeschaltet ist, der über die durch die Abgasleitung 14 strömenden Abgase angetrieben wird. Der über den Ableitungskanal abgezweigte Anteil der Ansaugluft bzw. des Ansauggemisches wird über eine Rückleitung 15 wieder in die Zufuhrleitung 16 an den Turbolader eingespeist.

## Patentansprüche

1. Drosseleinrichtung zur Steuerung der Luft- oder der Gemischzuführung bei füllungsgesteuerten Brennkraftmaschinen, insbesondere Verbrennungsmotoren, mit einem Führungskanal (2), in dem eine um eine Drehachse (4) verdrehbare, ihn in ihrer Schließstellung im wesentlichen vollständig verschließende Drosselklappe (3) angeordnet ist, **dadurch gekennzeichnet**, daß in der Wandung (1) des Führungskanals (2), in Strömungsrichtung (L) der Luft bzw. des Gemisches gesehen, im Bereich unmittelbar vor der Drosselklappe (3) ein Ableitungskanal (7) mit erheblich kleinerem Querschnitt als der Querschnitt des Führungskanales (2) angebracht ist, dessen Durchtrittsquerschnitt mittels eines Steuerelementes (6) in Abhängigkeit von der Stellung der Drosselklappe (3) derart verstellbar ist, daß in Schließstellung der Drosselklappe (3) der Durchtrittsquerschnitt des Ableitungskanales (7) vollständig offen und ab Erreichen eines vorgegebenen Öffnungswinkels der Drosselklappe (3) vollständig verschlossen ist.

2. Drosseleinrichtung nach Anspruch 1, dadurch gekennzeichnet, daß der vorgegebene Öffnungswinkel der Drosselklappe (3) kleiner als deren maximaler Öffnungswinkel ist.

3. Drosseleinrichtung nach Anspruch 1 oder 2, dadurch gekennzeichnet, daß der vorgegebene Öffnungswinkel der Drosselklappe (3) einstellbar ist.

4. Drosseleinrichtung nach einem der Ansprüche 1 bis 3, dadurch gekennzeichnet, daß das Steuerelement ein im Ableitungskanal (7) angebrachtes Drehventil (6) ist.

5. Drosseleinrichtung nach einem der Ansprüche 1 bis 4, dadurch gekennzeichnet, daß das Steuerelement (6) über einen Hebelmechanismus (5) mit der Drehachse (4) der Drosselklappe (3) oder einem Antriebselement für diese verbunden ist.

6. Drosseleinrichtung nach Anspruch 4 oder Anspruch 4 in Verbindung mit Anspruch 5, dadurch gekennzeichnet, daß das Drehventil als Drehzylinder (6) mit einem im Querschnitt kreisförmigen oder schlitzförmigen Durchlaß (18) ausgebildet ist.
